# EUROPÄISCHE PATENTANMELDUNG

(11) **EP 1 096 283 A2**
(43) Veröffentlichungstag der Anmeldung: **02.05.2001**
(21) Anmeldenummer: 00121640.7
(22) Anmeldetag: 04.10.2000
(51) Int. Cl.: G02B 6/38

(54) **Optischer Abschlussstecker**

(30) Priorität: 25.10.1999 DE 19951257
(71) Anmelder: Harting Automotive GmbH & Co. KG, 32339 Espelkamp (DE)
(72) Erfinder: Bruland, Alexander, Dipl.-Phys., 32369 Rahden (DE)

(57) **Zusammenfassung**

Zur Überbrückung eines offenen oder nicht belegten oder unterbrochenen Steckanschlusses in einem optischen Bussystem, wird ein optischer Abschlußstecker vorgeschlagen, der mit einem einliegenden Lichtwellenleiter die offene Ringleitung bei minimaler Koppeldämpfung schließt.

## Beschreibung

Die Erfindung betrifft einen optischer Abschlußstecker zum Überbrücken eines offenen, nicht belegten oder unterbrochenen Steckanschlusses eines optischen Bussystems.

In einer Ringleitung zur Übertragung optischer Signale muß jede Abzweigung mit einem Teilnehmer belegt sein, um den Datentransport der z.b. nur in einer Richtung verlaufenden optischen Signale zu ermöglichen, da jede Teilnehmerstation die Signale aufnimmt, prüft und aufbereitet weiterleitet.

Fällt eine der Teilnehmerstationen aus oder wird entfernt, muß die Busleitung mit einem aufwendigen optischen Umgehungsschalter oder einem optischen Überbrückungsstecker wieder geschlossen werden. Es kann auch vorgesehen sein, für einen weiteren Teilnehmer, der später hinzugefügt werden soll, eine Abzweigung vorzuhalten.

Der Erfindung liegt daher die Aufgabe zugrunde, einen optischen Abschlußstecker der eingangs genannten Art dahingehend auszubilden, dass ein offener Steckanschluß eines optischen Bussystems mit einem einfachen und möglichst dämpfungsarmen Überbrückungsstecker bzw. Abschlußstecker zu schließen.

Diese Aufgabe wird dadurch gelöst, dass der optische Abschlußstecker ein Steckgehäuse aufweist, das mit einer Steckbereich versehen ist, mittels dem der Abschlußstecker auf den Steckanschluss aufsteckbar ist, dass in dem Steckgehäuse eine Nut eingeformt ist, dass in die Nut ein Lichtwellenleiter mit angefügten Faserendhülsen eingelegt ist, und, dass die Faserendhülsen axial federnd gelagert mit ihren Enden in den Steckbereich weisen.

Eine vorteilhafte Ausgestaltung der Erfindung ist im Anspruch 2 angegeben. Die mit der Erfindung erzielten Vorteile bestehen insbesondere darin, dass der optischen Abschlußstecker eine einfache, platzsparende und kostengünstige Lösung darstellt, eine offene Steckverbindung in einem optischen Bussystem zu überbrücken, so dass die optischen Signale unterbrechungsfrei weitergeleitet werden.
Dabei wird durch den Einsatz von gefederten Faserendhülsen (bekannt aus der DE 297 09 602 U1) eine optimale optische Ankopplung erzielt, die eine minimale Koppeldämpfung bei der Signalübertragung gewährleistet.

Ein Ausführungsbeispiel der Erfindung ist in der Zeichnung dargestellt und wird im folgenden näher erläutert. Es zeigen:

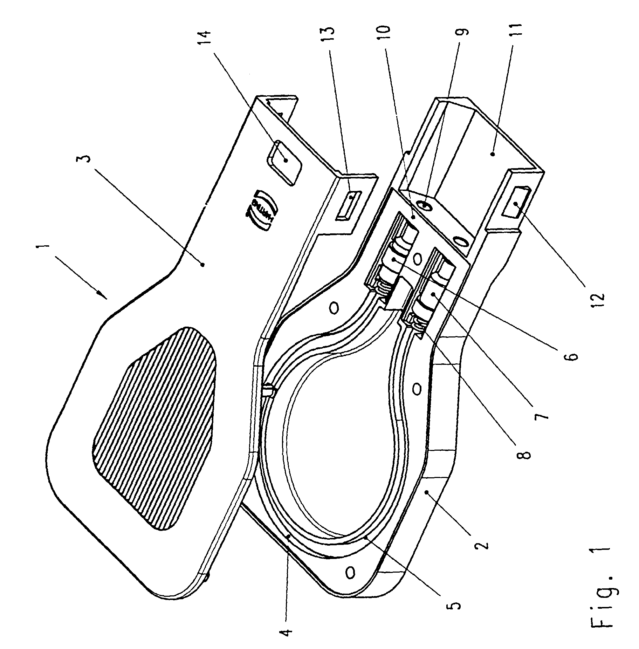

- Fig.1: eine perspektivische Darstellung eines optischen Abschlußsteckers bei geöffneter Abdeckung.

In der Fig. 1 ist in einer perspektivischen Darstellung ein optischer Abschlußstecker 1 gezeigt, dessen Abdeckung 3 vom Steckgehäuse 2 abgehoben ist und so einen Einblick in das Innere des Abschlußsteckers ermöglicht. In einer kreisförmig ausgebildeten Nut 4 ist ein Lichtwellenleiter 5 eingelegt, dessen beide Enden mit je einer Faserendhülse 6, 7 vercrimpt sind. Die Druckfedern 8 drücken die Faserendhülsen 6, 7 zumindest teilweise in je eine Führungsbohrung 9, die in dem Steg 10 vorgesehen sind und in den Steckbereich 11 weisen.

Die Führungsbohrungen 9 nehmen im gesteckten Zustand - mit einem hier nicht weiter gezeigten adäquaten Gegenstecker - ebenfalls dessen vorstehende Stirnflächen der Faserendhülsen auf, um eine optimale axiale Ausrichtung der Lichtwellenleiter sicherzustellen.
Der Steg 10 grenzt gleichzeitig den Bereich von Lichtwellenleiter mit den Faserendhülsen von dem kragenförmig vorstehenden Steckbereich 11 des Abschlußsteckers ab. Wobei der vorstehende Kragen, neben den nur teilweise in den Führungsbohrungen 9 eintauchenden Faserendhülsen, einen zusätzlichen Berührungsschutz der empfindlichen Faserstirnflächen darstellt.
Die Druckfedern 8 ermöglichen eine axiale Verschiebung der Faserendhülsen, um mit den Faserendhülsen des Gegensteckers einen konstanten, minimalen 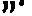 Abstand" der beiden optischen Stirnflächen der Lichtwellenleiter zu erreichen. Dazu ist die kreisförmige Nut 4 so bemessen, den Lichtwellenleiter 5 entsprechend einer möglichen axialen Verschiebung der Faserendhülsen 6, 7 in seinem Radius variieren zu können.
Die beiden Teile, Steckgehäuse 2 und Abdeckung 3, sind durch die in die Ausnehmung 13 eingreifenden hakenförmigen Rastmittel 12 miteinander verrastbar.
Die Ausnehmung 14 ist für eine Verriegelung mit dem Gegenstecker vorgesehen.

## Patentansprüche

1. Optischer Abschlußstecker zum Überbrücken eines offenen, nicht belegten oder unterbrochenen Steckanschlusses eines optischen Bussystems, dadurch gekennzeichnet,
dass der optische Abschlußstecker (1) ein Steckgehäuse (2) aufweist, das mit einer Steckbereich (11) versehen ist, mittels dem der Abschlußstecker auf den Steckanschluss aufsteckbar ist,
dass in dem Steckgehäuse (2) eine Nut (4) eingeformt ist,
dass in die Nut (4) ein Lichtwellenleiter (5) mit angefügten Faserendhülsen (6,7) eingelegt ist, und,
dass die Faserendhülsen (6,7) axial federnd gelagert mit ihren Enden in den Steckbereich (11) weisen.

2. Optischer Abschlußstecker nach Anspruch 1, dadurch gekennzeichnet, dass die Faserendhülsen (6,7) mit ihrem vorderen Ende in die Führungsbohrungen (9) eines Steges (10) eintauchen.
